Europäisches Patentamt

European Patent Office

Office européen des brevets

(19)

(11) **EP 1 084 331 B1**

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(51) Int Cl.⁷: **F01N 1/00**

(21) Anmeldenummer: **99915512.0**

(86) Internationale Anmeldenummer:
**PCT/DE99/00692**

(22) Anmeldetag: **12.03.1999**

(87) Internationale Veröffentlichungsnummer:
**WO 99/47795 (23.09.1999 Gazette 1999/38)**

(54) **VERFAHREN UND VORRICHTUNG ZUM ÜBERWACHEN DER FUNKTIONSFÄHIGKEIT EINES KATALYSATORS EINER BRENNKRAFTMASCHINE**

METHOD AND DEVICE TO MONITOR THE FUNCTIONING OF A CATALYST IN AN INTERNAL COMBUSTION ENGINE

DISPOSITIF ET PROCEDE DE SURVEILLANCE DE LA CAPACITE FONCTIONNELLE D'UN CATALYSEUR POUR MOTEUR A COMBUSTION INTERNE

(84) Benannte Vertragsstaaten:
**DE FR**

(30) Priorität: **17.03.1998 DE 19811574**

(43) Veröffentlichungstag der Anmeldung:
**21.03.2001 Patentblatt 2001/12**

(73) Patentinhaber: **SIEMENS AKTIENGESELLSCHAFT 80333 München (DE)**

(72) Erfinder: **LEMIRE, Bertrand D-84069 Schierling (DE)**

(56) Entgegenhaltungen:
**EP-A- 0 756 071          DE-A- 19 645 202**
**US-A- 5 715 676          US-A- 5 822 979**

**Beschreibung**

Die Erfindung betrifft ein Verfahren und eine Vorrichtung zum Überwachen der Funktionsfähigkeit eines im Abgastrakt einer Brennkraftmaschine angeordneten Katalysators gemäß dem Oberbegriff der Patentansprüche 1 und 20.

Die Abgasnachbehandlung bei Brennkraftmaschinen erfolgt heutzutage üblicherweise mit einem oder mehreren Katalysatoren in der Auspuffanlage der Brennkraftmaschine. Strenge Emissionsgrenzwerte für Schadstoffemissionen von Brennkraftmaschinen, insbesondere in Fahrzeugen, machen die zuverlässige Überwachung des eingesetzten Katalysators erforderlich. Von solchen Diagnoseverfahren wird verlangt, daß sie die kontinuierliche Überprüfung des Katalysators im Betrieb ermöglichen, auch als On-Board-Diagnose bezeichnet.

Ein für Otto-Motoren bekanntes Verfahren zur Katalysatorüberwachung basiert auf der Auswertung des Zusammenhangs zwischen dem Sauerstoffspeichervermögen und dem Konvertierungsgrad eines Dreiwege-Katalysators. Ein solches Verfahren ist z.B. aus der DE 195 36 252 bekannt; dabei werden zwei Sauerstoff- oder Lambda-Sonden eingesetzt, eine stromauf und eine stromab des Katalysators. Dieses Verfahren kann nur dann angewendet werden, wenn die Lambda-Regelung aktiv ist und der Katalysator seine Betriebstemperatur erreicht hat. Die Auswertung der Lambdasondensignale erlaubt nur eine indirekte Katalysatorüberwachung, wobei die Korrelation zwischen Sauerstoffspeichervermögen und Konvertierungsgrad des Katalysators nicht sehr gut ist. Deshalb ist dieses Verfahren, ebenso wie das aus DE 24 44 334 bekannte auf die Diagnose relativ großer Konvertierungsgraddifferenzen begrenzt, wodurch nur eine starke Verschlechterung des Katalysators diagnostizierbar ist. Zur Diagnose einer geringen Katalysatorverschlechterung, wie sie strenge Emissionsgrenzwerte erforderlich machen, sind diese Verfahren nicht tauglich.

Einen anderen Weg zur Katalysatorüberprüfung beschreitet das aus DE 40 39 429 bekannte Verfahren. Es sieht stromab des Katalysators einen Kohlenmonoxid- und/oder Wasserstoffkonzentrationsaufnehmer vor. Bei Überschreitung eines vorgegebenen Grenzwertes des Kohlenmonoxid- und/oder Wasserstoffgehaltes wird ein defekter Katalysator erkannt. Die Messungen erfolgen bei definierten, stationären Betriebszuständen der Brennkraftmaschine, d.h. dann, wenn der Katalysator seinen höchsten Konvertierungsgrad aufweist.

Aus DE 195 37 778 ist ein Verfahren zur Überwachung der Funktion eines $NO_x$-reduzierenden Katalysators einer Dieselbrennkraftmaschine bekannt, bei der als Reduktionsmittel Kraftstoff stromauf des Katalysators zudosiert wird. Dabei ist zur Überwachung des $NO_x$-Katalysators ein Aufnehmer für die Kohlenwasserstoffkonzentration im Abgas stromab des Katalysators vorgesehen, um ein Nachlassen der katalytischen Reduktion anhand erhöhter Kohlenwasserstoffkonzentrationen im Abgas erkennen zu können.

Eine exakte Steuerung einer Brennkraftmaschine mit Katalysatoren im Abgastrakt ermoglicht im normalen Betrieb, d.h. nach Erreichen der Betriebstemperatur, sehr hohe Konvertierungsgrade, z.B. über 95%. Strenge Emissionsgrenzwerte erlauben nur geringe Abweichungen von dieser fast vollständigen Konvertierung, weshalb ein OBD-System in der Lage sein muß, bereits geringe Abweichungen festzustellen.

Es ist Aufgabe der vorliegenden Erfindung, ein Verfahren und eine Vorrichtung zum Überwachen der Funktionsfähigkeit eines im Abgastrakt einer Brennkraftmaschine angeordneten Katalysators anzugeben, mit denen sich bereits eine geringe, durch Alterung bedingte Verschlechterung des Konvertierungsgrades sehr prazise erfassen läßt.

Das Verfahren und die Vorrichtung gemäß der Erfindung sind in den Ansprüchen 1 und 20 gekennzeichnet. Vorteilhafte Ausgestaltungen und Ausführungsformen sind in den Unteransprüchen definiert.

Erfindungsgemäß erfolgt die Überprüfung der Funktionsfähigkeit des Katalysators während der Aufheizphase der Brennkraftmaschine. Da während der Aufheizphase der Brennkraftmaschine der größte emittierte Schadstoffanteil ausgestoßen wird, ist eine Funktionsüberprüfung des Katalysators in dieser Zeitspanne besonders bedeutsam. Zum anderen fällt es aufgrund der höheren Schadstoffkonzentration im Abgas hinter dem Katalysator während der Aufheizphase leichter, Änderungen in der Funktionsfähigkeit des Katalysators zu diagnostizieren.

Die Grundidee des erfindungsgemäßen Verfahrens sowie der erfindungsgemäßen Vorrichtung beruht auf dem Zusammenhang zwischen dem Konvertierungsgrad bzw. dem Emissionsniveau einer Abgaskomponente hinter einem zu überwachenden Katalysator und den thermischen Eigenschaften, d.h. der Temperatur, des Katalysators. Der Konvertierungsgrad des Katalysators hängt direkt von seiner Temperatur ab. Diese Abhängigkeit ändert sich mit der Alterung des Katalysators. Der Konvertierungsgrad wird mit zunehmenden Alter des Katalysators schlechter. Diese Änderung der Abhängigkeit des Konvertierungsgrades des Katalysators von seiner Temperatur mit der Alterung bietet somit eine Möglichkeit, den Katalysator auf seine Funktionsfähigkeit hin zu überwachen.

Die thermische Eigenschaft des Katalysators kann durch die Festkörpertemperatur des Katalysators selbst oder aber durch die dem Katalysator zugeführte Wärme ausgedrückt werden. Letztere kann durch die Bestimmung der Abgastemperatur stromauf des Katalysators und Bestimmung des dem Katalysator zugeführten Volumenstroms sowie anschließender Berechnung der dem Katalysator zugeführten Warme aus Abgastemperatur, Volumenstrom und Wärmekapität des Abgases erfolgen. Eine Energiezufuhr durch eine eventuell vorhandene Katalysatorheizung muß natürlich ebenfalls berücksichtigt werden. Vorzugsweise kann die Abgastemperatur stromauf des Katalysators mittels eines Modells aus Betriebskenngrößen der Brennkraftmaschine berechnet werden. Weiter wird die dem Katalysator zugeführte Wärme vorzugsweise nur dann bestimmt, wenn nach einem Start der Brennkraftmaschine keine latente Wärme mehr zur Verdampfung von Kondensaten im Katalysator aufgenommen wird.

Bei der Erfindung wird die Überwachung des Katalysators vorzugsweise anhand von Messungen einer Schadstoffkomponente, insbesondere Kohlenmonoxid (CO), Kohlenwasserstoff (HC) oder Stickoxide $NO_x$, vorgenommen. Es können jedoch auch mehrere dieser Schadstoffkomponenten berücksichtigt werden.

In einer Ausführungsform der Erfindung wird stromauf sowie stromab des Katalysators die Konzentration einer Schadstoffkomponente im Abgas gemessen. Aus diesen Meßwerten wird der Konvertierungsgrad des Katalysators errechnet. In einer Ausführungsform des erfindungsgemäßen Verfahrens wird dann, wenn die Katalysatortemperatur bei einem gegebenen Konvertierungsgrad über einem Schwellwert liegt, eine mangelnde Katalysatorfunktion erkannt. Alternativ ist dies auch möglich, wenn bei gegebener Katalysatortemperatur ein Mindestkonvertierungsgrad nicht erreicht wird.

Wird als Maß für die Temperatur des Katalysators die dem Katalysator zugeführte Wärme verwendet, kann ein nicht funktionsfähiger Katalysator dadurch erkannt werden, daß die Energie, die notwendig ist, um den Konvertierungsgrad des Katalysator von einem Anfangswert $\eta_i$, z.B. 20%, auf einen Endwert $\eta_f$, z.B. 60% zu erhöhen, bestimmt wird. Die zum Erreichen der Konvertierungsgraderhöhung $\eta_f - \eta_i$ notwendige Energie, die dem Katalysator in Form von Wärme zugeführt werden muß, ist bei einem gealterten, funktionsuntüchtigen Katalysator höher als bei einem neuen, funktionstüchtigen Katalysator. Der Mittelwert dieser Energien steigt ebenfalls mit der Alterung des Katalysators. Das Produkt aus Mittelwert der Energie und zugeführter Energie ist folglich ein Maß für das Aufwärmverhalten des Katalysators und somit für seine Funktionsfähigkeit. Durch Setzen eines Schwellwertes für dieses Produkt kann auf einfache Weise die Katalysatordiagnose durchgeführt werden. Wird der Schwellwert überschritten, wird der Katalysator als nicht funktionsfähig erkannt. Um thermischen Randbedingungen des Systems Rechnung zu tragen, ist es vorzugsweise möglich, die Diagnoseschwelle als Funktion von Temperaturwerten der Brennkraftmaschine, wie z.B. Kühlwassertemperatur, Ansauglufttemperatur, Außentemperatur oder Abgastemperatur beim Start der Brennkraftmaschine aus einem Kennfeld zu wählen. Ebenso kann das Fahrprofil eines Fahrzeuges, mit dem die Brennkraftmaschine ausgerüstet ist, das die Aufheizung des Katalysators beeinflussen kann, durch einen Korrekturfaktor berücksichtigt werden.

Bei einer Ausführungsform wird auf eine Messung der Schadstoffkonzentration stromauf des Katalysators verzichtet; statt dessen wird nur die Konzentration einer der Schadstoffkomponenten hinter dem Katalysator gemessen. Zur Diagnose wird die dem Katalysator zugeführte Wärme bzw. die Änderung der Festkörpertemperatur des Katalysators bestimmt, die notwendig ist, um die Konzentration der zu überwachenden Schadstoffkomponente von einem Anfangswert $[i]_i$ auf einen Endwert $[i]_f$ zu senken. Da die Konzentration für sich allein noch kein direktes Maß für die emittierte Schadstoffmenge ist, wird sie mit der Abgasmenge verknüpft und die Masse der Schadstoffkomponente bestimmt. Je besser das Aufheizverhalten des Katalysators, umso niedriger ist die Masse, die während der Zufuhr einer gegebenen Wärme oder während einer vorgegebenen Festkörpertemperaturänderung des Katalysators emittiert wird. Bei Überschreiten eines gewissen Schwellwertes wird der Katalysator als nicht funktionsfähig erkannt. Vorzugsweise wird die emittierte Masse mit der mittleren zugeführten thermischen Energie multipliziert, um den zeitlichen Verlauf der Energiezufuhr, wie z.B. Lasteinflüsse, zu berücksichtigen. Das Produkt aus emittierter Masse und zugeführter Energie ist dann ein Maß für die Funktionsfähigkeit des Katalysators, und bei Überschreiten eines Schwellwertes wird der Katalysator als defekt erkannt. Um den thermischen Randbedingungen des Systems Rechnung zu tragen, wird vorzugsweise auch hier die Diagnoseschwelle als Funktion von Temperaturwerten der Brennkraftmaschine, wie z.B. Kühlwassertemperatur, Ansauglufttemperatur, Außentemperatur oder Abgastemperatur beim Start der Brennkraftmaschine definiert. Auch kann das Fahrprofil eines Fahrzeugs, mit dem die Brennkraftmaschine ausgestattet ist, während des Verfahrens durch einen Korrekturfaktor berücksichtigt werden.

Es sei darauf hingewiesen, daß das erfindungsgemäße Verfahren sowie die erfindungsgemäße Vorrichtung für alle Katalysatortypen wie Reduktionskatalysatoren, Oxidationskatalysatoren, insbesondere geregelte Drei-Wege-Katalysatoren, Speicherkatalysatoren oder Adsorbern, sowie für Otto- wie Dieselbrennkraftmaschinen anwendbar sind.

Die Erfindung wird nachfolgend anhand von Ausführungsbeispielen unter Bezugnahme auf die Zeichnung näher erläutert. Die Zeichnung zeigt:

Fig. 1    eine erfindungsgemäße Vorrichtung zum Ausführen des erfindungsgemäßen Verfahrens,

Fig. 2    ein Diagramm mit dem Verlauf des Konvertierungsgrads eines Katalysators als Funktion der Katalysatortemperatur,

Fig. 3    eine weitere Ausführungsform einer erfindungsgemäßen Vorrichtung,

Fig. 4    ein Diagramm mit dem Verlauf des Konvertierungsgrads eines Katalysators als Funktion der dem Katalysator zugeführten Wärme,

Fig. 5    ein Diagramm mit Meßergebnissen, das die Anwendung des erfindungsgemäßen Verfahrens für einen Drei-Wege-Katalysator veranschaulicht,

Fig. 6    ein Diagramm mit der von einer Brennkraftmaschine emittierten Masse als Funktion der dem Katalysator zugeführten Wärme und

Fig. 7    ein Diagramm mit Meßergebnissen, das die Anwendung einer weiteren Ausführungsform des erfindungsgemäßen Verfahrens bei einem Drei-Wege-Katalysator veranschaulicht.

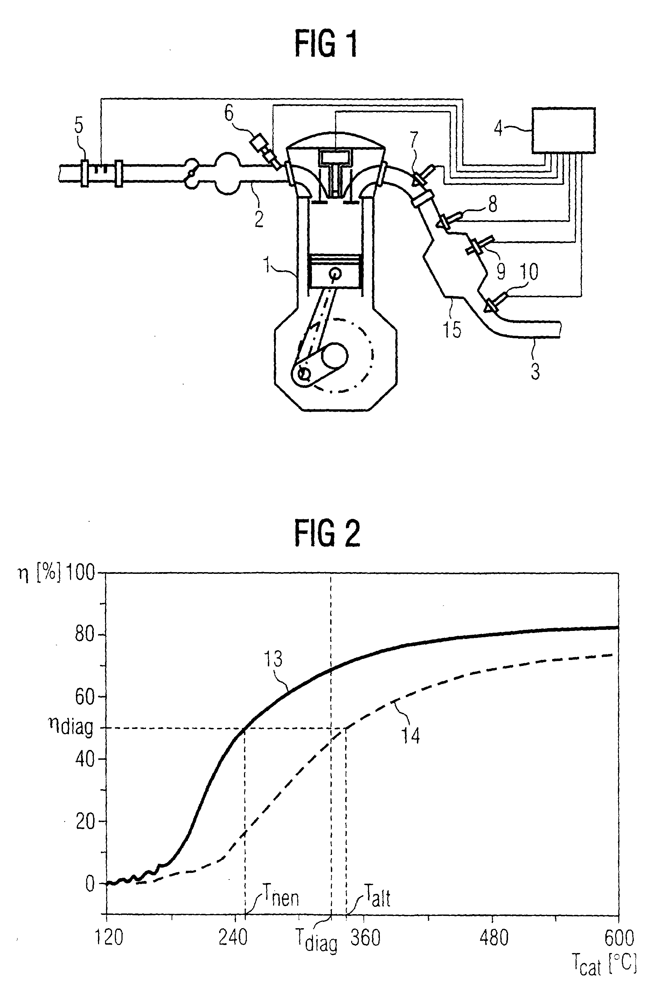

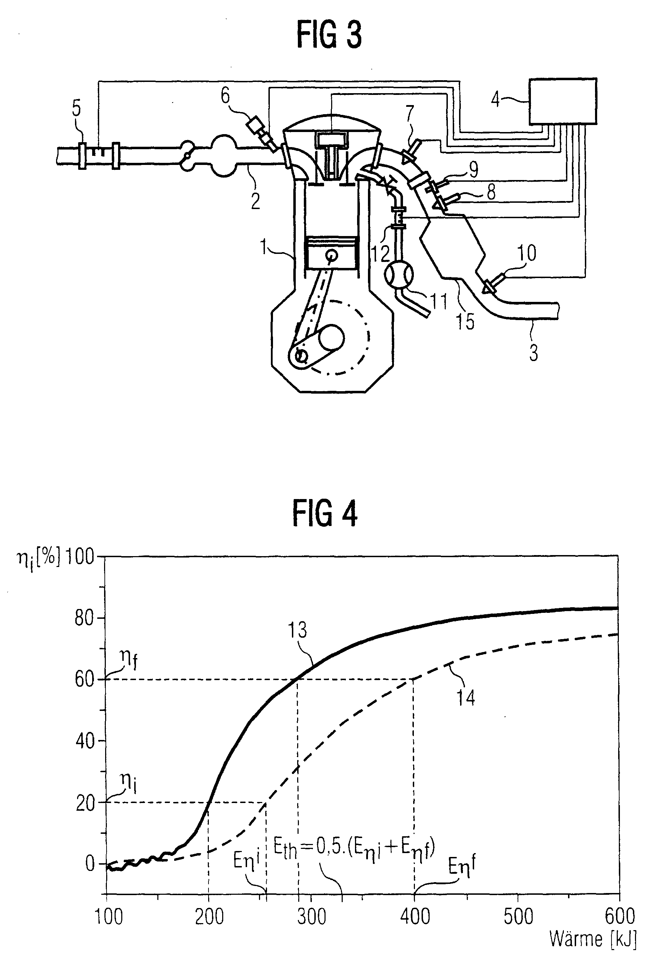

Anhand der Fig. 1 und 2 wird ein erstes Ausführungsbeispiel eines Verfahrens und einer Vorrichtung zum Überwachen der Funktionsfähigkeit eines Katalysators beschrieben.

Wie Fig. 1 zeigt, hat eine Brennkraftmaschine 1 einen Ansaugtrakt 2 sowie einen Abgastrakt 3. Ihr Betrieb wird von einem Steuergerät 4 gesteuert beziehungsweise geregelt. Dem Steuergerät 4 wird der Meßwert eines Ansaugluftmassenaufnehmers 5 zugefizhrt, der im Ansaugtrakt 2 der Brennkraftmaschine 1 angeordnet ist und den Ansaugluftmassenstrom erfaßt. Das Steuergerät 4 steuert weiter die Einspritzung des Kraftstoffes über Einspritzventile 6 in den Ansaugtrakt 3 und erfaßt mittels einer Lambda-Sonde 7 den Sauerstoffgehalt des Abgases, um den Betrieb der Brennkraftmaschine zu regeln. Im Abgastrakt 3 ist ein Katalysator 15 angeordnet, dessen Funktionsfähigkeit, d.h. Konvertierungsgrad überwacht werden soll.

Der Konvertierungsgrad $\eta$ eines Katalysators hängt direkt von der Temperatur des Katalysators $T_{cat}$ ab. Dieser Zusammenhang ist in Fig. 2 dargestellt. Die Kurve 13 zeigt die Temperaturabhängigkeit des Konvertierungsgrades $\eta$ eines neuen Katalysators. Kurve 14 beschreibt einen alten funktionsuntüchtigen Katalysator. Mit steigender Katalysatortemperatur $T_{cat}$ nimmt $\eta$ bis zu einem maximalen Wert zu. Der Verlauf oberhalb die Temperatur, bei der der maximale Wert erreicht wird, hängt vom verwendeten Katalysator ab. Er ist annähernd konstant bei einem Drei-Wege-Katalysator, nimmt z.B. bei einem Entstickungskatalysator dagegen ab.

Der Konvertierungsgrad für eine Komponente ergibt sich aus folgender Gleichung:

$$\eta_i = ([i]_{vor\ Kat.} - [i]_{nach\ Kat.}) / [i]_{vor\ Kat.} \qquad (1),$$

wobei [i] die Volumenkonzentration der Schadstoffkomponente i darstellt. Mit der Alterung des Katalysators nimmt seine Aktivierungsenergie ab und der Kurvenverlauf ändert sich. Die für einen bestimmten Konvertierungsgrad $\eta_i$ notwendige Katalysatortemperatur $T_{cat}$ erhöht sich, und der maximale Konvertierungsgrad $\eta_{i,max}$ nimmt ab; die Kurve verbreitert sich, wie in Fig. 2 zu sehen ist. Die Änderung des Konvertierungsgrads als Funktion der Temperatur bei der Alterung bietet somit eine Möglichkeit, den Katalysator auf seine Funktionsfähigkeit hin zu überwachen.

Um die Temperatur des Katalysators zu bestimmen, wird dessen Festkörpertemperatur mittels eines Temperaturaufnehmers 9 gemessen, wobei der Meßwert dem Steuergerät 4 zugeführt wird. Um die Konzentration einer Schadstoffkomponente im Abgas und hieraus den Konvertierungsgrad des Katalysators zu bestimmen, sind stromauf des Katalysators 15 ein Schadstoffkonzentrationsaufnehmer 8 und stromab des Katalysators ein Schadstoffkonzentrationsaufnehmer 10 angeordnet, die abhängig von der Konzentration der Schadstoffkomponente, z.B. der Kohlenwasserstoffe (HC), Meßwerte an das Steuergerät 4 liefern. Dort werden diese mittels einer mathematischen Funktion oder eines Kennfeldes in die Schadstoffvolumenkonzentration umgerechnet. Als Schadstoffkonzentrationsaufnehmer, die die Volumenkonzentration einer zu überwachenden Schadstoffkomponente im Abgas erfassen, sind planare Abgassensoren möglich, die eine Änderung der elektrischen Leitfähigkeit eines Metalloxids (z.B. dotiertes $SrTiO_3$) als Meßsignal zeigen. Es sind aber auch Abgassensoren denkbar, die einen Festkörperelektrolyten (z.B. stabilisiertes $ZrO_2$ oder $CeO_2$) als Meßelement verwenden. Im beschriebenen Ausführungsbeispiel handelt es sich um zwei planare Kohlenwasserstoffsensoren für eine geforderte OBD-Überwachungsfunktion.

Die direkte Auswertung des Zusammenhangs $\eta_i$ ($T_{cat}$) erfolgt, indem während des Warmlaufs des Motors in der Aufheizphase die Festkörpertemperatur des Katalysators 15 mit dem Temperaturaufnehmer 9 gemessen wird und dazu aus den Signalen der Schadstoffkonzentrationsaufnehmer 8, 9 der Konvertierungsgrad $\eta$ ermittelt wird. Bei gegebenem Konvertierungsgrad $\eta_{diag}$ hat ein neuer Katalysator eine sehr viel niederere Temperatur $T_{neu}$ als ein älterer Katalysator. Liegt, wie in Fig. 2 zu sehen, die Temperatur $T_{alt}$ zum gegebenen Konvertierungsgrad $\eta_{diag}$ über einer Temperaturschwelle $T_{diag}$, wird der Katalysator als defekt erkannt. Alternativ kann auch der Konvertierungsgrad $\eta$ zu einer gegebenen Temperatur $T_{diag}$ bestimmt werden und bei Unterschreiten eines vorgegebenen Schwellwertes $\eta_{diag}$ der Katalysator als defekt erkannt werden.

Anhand der Fig. 3 und 4 wird eine weitere Ausführungsform der Erfindung beschrieben. Elemente, die denen der Fig. 1 entsprechen, sind mit gleichen Bezugszeichen gekennzeichnet, es sei hier auf die Beschreibung der Fig. 1 verwiesen. Im Unterschied zur Vorrichtung der Fig. 1 ist kein Temperaturaufnehmer 9 am Katalysator 15 vorgesehen. Stattdessen wird die Temperatur des Abgases stromauf des Katalysators mit einem Temperaturaufnehmer 9 vom Steuergerät 4 erfaßt. Über eine Sekundärluftpumpe 11 wird dem Abgas stromauf des Katalysators 15 ein Sekundärluftmassenstrom zugeführt, der von einem Sekundärluftmassenaufnehmer 12 gemessen wird, wobei der Meßwert dem Steuergerät 4 zugeführt wird.

Alternativ zur Abhängigkeit des Konvertierungsgrads des Katalysators von seiner Festkörpertemperatur wird in diesem Fall die Abhängigkeit des Konvertierungsgrades von der dem Katalysator zugeführten Energie für die Diagnose verwendet. Die Energie zur Aufheizung des Katalysators wird diesem vom Abgas in Form von Wärme zugeführt. Diese Wärme kann aus der Abgastemperatur vor dem Katalysator und dem dem Katalysator zugeführten Abgasmassenstrom nach folgender Gleichung bestimmt werden:

$$E = \int_{ti}^{tf} T_{abgas} \cdot \left( \dot{M}_{ansaug} \cdot \left( 1 + \frac{1}{L_0 \cdot \lambda} \right) + \dot{M}_{sekundär} \right) \cdot C_p \ dt \qquad (2)$$

wobei $T_{Abgas}$ die Abgastemperatur stromauf des Katalysators, $\dot{M}_{ansaug}$ der Ansaugluftmassenstrom, $\dot{M}_{sekundar}$ der Sekundärluftmassenstrom, $C_p$ die Wärmekapazität des Abgases bei konstantem Druck, $\lambda$ die Luftzahl und $L_0$ die Luftmasse pro Kraftstoffmasseneinheit bei stöchometrischer Verbrennung darstellt. Die Wärme $\Delta Q = E_{\eta f} - E_{\eta i}$, die notwendig ist, um den Konvertierungsgrad des Katalysators von einem Anfangswert $\eta_i$ (Wärme $E_{\eta i}$) auf einen Endwert $\eta_f$ (Wärme $E_{\eta f}$) zu erhöhen, ist bei einem gealterten Katalysator höher als bei einem neuen Katalysator, wie in Fig. 4 zu sehen ist. Die in Fig. 4 gezeigten Kurven entsprechen denen der Fig. 2, mit dem Unterschied, daß sie über der dem Katalysator 15 zugeführten Wärme anstatt über der Festkörpertemperatur aufgetragen sind. Die zum Erreichen von $\eta_i$ und $\eta_f$ notwendigen Energien $E_{\eta i}$ und $E_{\eta f}$ sind ebenfalls bei einem gealterten Katalysator höher als bei einem neuen Katalysator. Ihr Mittelwert $\eta_{th} = 0.5 \ (E_{\eta i} + E_{\eta f})$ steigt ebenso mit der Alterung des Katalysators an. Das Produkt aus Mittelwert und zugeführter Wärme $\Delta Q$ ist folglich ein brauchbares Maß für das Aufwärmverhalten des Katalysators und somit für seine Funktionsfähigkeit. Durch Setzen eines Schwellwertes für das Produkt kann auf einfache Weise die Katalysatordiagnose durchgeführt werden. Bei Schwellwertüberschreitung wird der Katalysator als defekt erkannt.

Da letztendlich jedoch die Aufheizung des Katalysators für seinen Konvertierungsgrad entscheidend ist, sind die thermischen Randbedingungen des Systems von Bedeutung, wenn man die dem Katalysator zugeführte Wärme als Maß für seine Aufheizung verwendet. Um diesen thermischen Randbedingungen Rechnung zu tragen, kann die Diagnoseschwelle vorzugsweise als Funktion von Temperaturwerten der Brennkraftmaschine wie z.B. Kühlwassertemperatur, Ansaugtemperatur, Außentemperatur oder Abgastemperatur beim Inbetriebsetzen der Brennkraftmaschine gewählt werden. Das Steuergerät 4 enthält dazu ein geeignetes Kennfeld. Weiter kann das Fahrprofil der Fahrzeuggeschwindigkeit eines Fahrzeuges, in dem die Brennkraftmaschine eingebaut ist, durch einen Korrekturfaktor,der im Steuergerät 4 abgelegt sein kann, berücksichtigt werden.

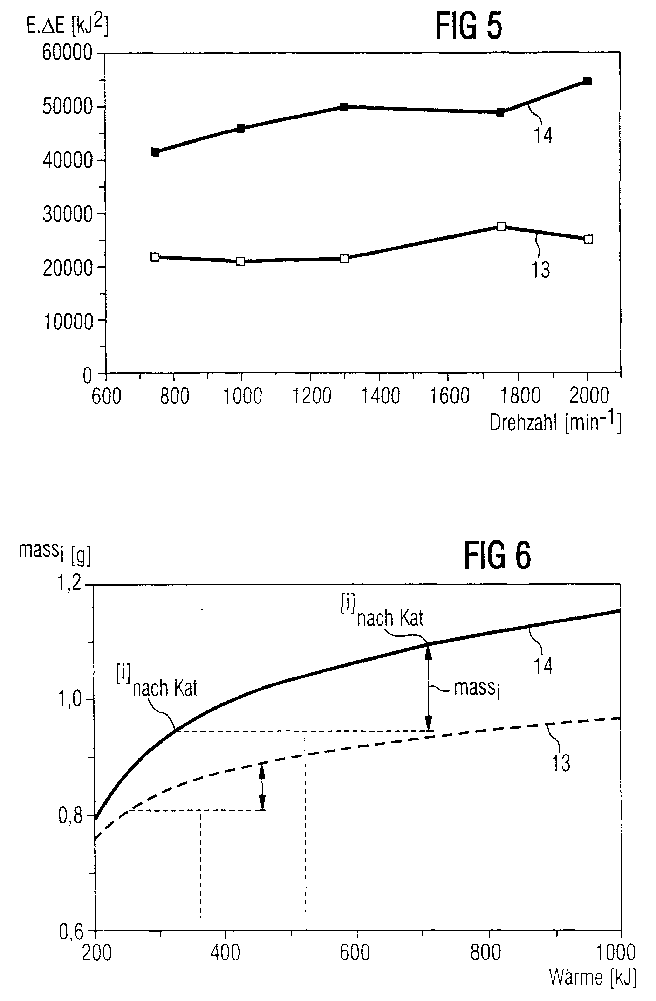

In Fig. 5 sind Meßergebnisse dargestellt, die das erfindungsgemäße Verfahren am Beispiel der Oxidation von Kohlenwasserstoffen mit einem Drei-Wege-Katalysator demonstrieren. Die Messungen erfolgten an einem Motorprüfstand, der Aufbau entspricht dem der Fig. 3. Die Brennkraftmaschine wurde aus kaltem Zustand (300° K) auf unterschiedliche konstante Drehzahlen gestartet, um so unterschiedliche Aufheizprofile des Katalysators zu erzeugen. Die Diagnose wurde mit $\eta_i = 20\%$ und $\eta_f = 60\%$ für die Konzentration von Kohlenwasserstoff (HC) durchgeführt. Die Bestimmung der Kohlenwasserstoffkonzentration stromauf und stromab des Katalysators erfolgte mit einem Flammen-Ionisationsdetektor (FID). Es wurden zwei Katalysatoren untersucht. Der neue Katalysator, Meßkurve 13, weist nach Fahrzyklus FTP 75 eine Emission von 50 mgHC pro Meile auf. Der gealterte Katalysator der Meßkurve 14 erreicht 100 mgHC pro Meile. Die beiden Katalysatoren können mit dem erfindungsgemäßen Verfahren gut unterschieden werden, wie Fig. 5 zeigt.

In den bisher vorgestellten Ausführungsbeispielen sind zwei Schadstoffkonzentrationsaufnehmer im Abgas erforderlich. Eine kostengünstigere und deshalb bevorzugte Möglichkeit bietet eine weitere Ausführungsform der Erfindung, bei der die Messung der Volumenkonzentration der Schadstoffkomponente nur stromab dem Katalysator erfolgt. Ansonsten entspricht die Vorrichtung dieses Ausführungsbeispiels der Vorrichtung der Fig. 3. Zur Diagnose wird vorzugsweise die Wärme bestimmt, die dem Katalysator zugeführt werden muß, um die Konzentration $[i]_{nach \ Kat.}$ der zu überwachenden Schadstoffkomponente i von einem Anfangswert $[i]_i$ auf einen Endwert $[i]_f$ zu senken. Da die Konzentration, insbesondere die Volumenkonzentration, kein Maß für die emittierte Schadstoffmenge ist, wird mit folgender Gleichung aus der Konzentration die Masse der Komponente i bestimmt:

$$mass = \int_{[i]_i}^{[i]_f} [i] \cdot \left( \dot{M}_{ansaug} \cdot \left( 1 + \frac{1}{L_0 \cdot \lambda} \right) + \dot{M}_{sekundär} \right) \cdot \frac{M_i}{M_{abgas}} \ dt \qquad (3) \ ,$$

wobei $M_i$ die Molmasse der Komponente i, $M_{abgas}$ die Molmasse des Abgases und alle anderen Bezeichnungen der der Gleichung (2) entsprechen. Um den zeitlichen Verlauf der Energiezufuhr, insbesondere Lasteinflüsse, zu berücksichtigen, wird $mass_i$ wie beim vorherigen Ausfuhrungsbeispiel mit der mittleren thermischen Energie $E_{th}$ multipliziert. Das Produkt aus $mass_i$. $E_{th}$ ist wieder ein Maß für die Funktionsfähigkeit des Katalysators. Beim Überschreiten eines Schwellwertes wird der Katalysator als defekt erkannt. Um wiederum den thermischen Randbedingungen des Systems Rechnung zu tragen, wird die Diagnoseschwelle als Funktion von Temperaturwerten der Brennkraftmaschine, wie z. B. Kuhlwassertemperatur, Ansauglufttemperatur, Außentemperatur oder Abgastemperatur der Brennkraftmaschine vor Inbetriebsetzung definiert und in einem Kennfeld im Steuergerät 4 abgelegt. Das Fahrprofil eines mit der Brennkraftmaschine ausgerusteten Fahrzeuges kann während der Diagnose wiederum durch einen geschwindigkeitsabhängigen Korrekturfaktor berücksichtigt werden.

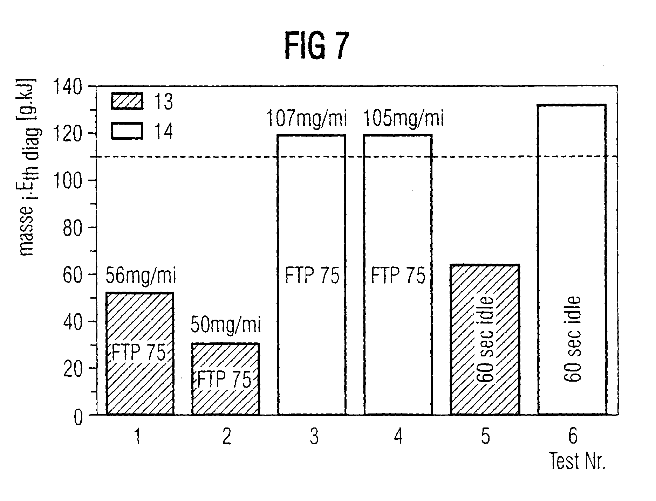

In Fig. 7 sind Meßergebnisse dargestellt, die die Anwendung des Verfahrens am Beispiel der Oxidation von Kohlenwasserstoffen in einem Drei-Wege-Katalysator demonstrieren. Die Messungen erfolgten auf einem Rollenprüfstand, der Aufbau entspricht dem der Fig. 3 ohne den Schadstoffkonzentrationsaufnehmer 8 stromauf des Katalysators. Der Schadstoffkonzentrationsaufnehmer 10 stromab des Katalysators 15 ist in diesem Auführungsbeispiel ein resistiver planarer Sensor. In Test Nr. 1, 2 und 5 wurde ein neuer Katalysator, in den Tests 3, 4 und 6 der Fig. 7 wurde ein alter Katalysator untersucht. In den Tests 1 und 2 bzw. 3 und 4 wurden aufeinanderfolgende Fahrzyklen FTP 75 durchlaufen, anschließend an diese Tests wurde im Test 5 bzw. 6 die Brennkraftmaschine 60 s im Leerlauf gehalten. Wie zu sehen ist, überschreiten die Tests mit dem gealterten Katalysator deutlich den Schwellwert von 110 g kJ, während die Tests mit dem neuen Katalysator deutlich darunterliegende Werte zeigen. Dadurch ist es möglich, einen alten, nicht mehr funktionstüchtigen Katalysator von einem neuen zu unterscheiden.

Das Ergebnis der Funktionsüberprüfung kann dem Führer der Brennkraftmaschine 1 bzw. eines damit ausgerüsteten Fahrzeuges über eine Warnvorrichtung (nicht dargestellt) signalisiert werden. Alternativ kann das Steuergerät 4 einen Speicher (nicht gezeigt) aufweisen, in dem eine Aussage über die Funktionfähigkeit der Brennkraftmaschine 1 abgelegt wird, die z.B. bei einer Wartung ausgelesen werden kann.

Es sei darauf hingewiesen, daß die Messung der Abgastemperatur im vorstehend geschilderten Verfahren durch eine modellbasierte Berechnung der Abgastemperatur aus Betriebskenngrößen der Brennkraftmaschine ersetzt werden kann. Weiter sei darauf hingewiesen, daß das Steuergerät 4 in das Betriebssteuergerät der Brennkraftmaschine integriert oder ein eigenständiges Gerät sein kann.

## Patentansprüche

1. Verfahren zum Überwachen der Funktionsfähigkeit eines im Abgasttrakt einer Brennkraftmaschine angeordneten Katalysators, bei dem durch laufende Messungen während einer Aufheizphase des Katalysators eine für die Temperatur des Katalysators charakteristische erste Größe sowie eine für den Konvertierungsgrad des Katalysators charakteristische zweite Größe, die von der ersten Größe abhängig ist, bestimmt werden und eine von der Alterung des Katalysators verursachte Änderung der Abhängigkeit der zweiten Größe von der ersten Größe zum Überwachen der Funktionsfähigkeit des Katalysators benutzt wird.

2. Verfahren nach Anspruch 1, **dadurch gekennzeichnet, daß** als erste Größe die Festkörpertemperatur des Katalysators verwendet wird.

3. Verfahren nach Anspruch 1, **dadurch gekennzeichnet, daß** als erste Größe die dem Katalysator zugeführte Wärme verwendet wird.

4. Verfahren nach Anspruch 3, **dadurch gekennzeichnet, daß** die dem Katalysator zugeführte Wärme durch falgende Schritte bestimmt wird:

   - Bestimmen der Abgastemperatur stromauf des Katalysators,
   - Bestimmen des dem Katalysator zugeführten Volumenstroms des Abgases und
   - Berechnung der dem Katalysator zugeführten Wärme aus Abgastemperatur, Volumenstrom und Wärmekapazität des Abgases.

5. Verfahren nach einem der Anspruch 3 oder 4, **dadurch gekennzeichnet, daß** die dem Katalysator zugeführte Wärme nur dann bestimmt wird, wenn nach einem Kaltstart der Brennkraftmaschine keine latente Wärme mehr zur Verdampfung von Kondensaten im Katalysator aufgenommen wird.

6. Verfahren nach einem der Ansprüche 4 oder 5, **dadurch gekennzeichnet, daß** die Abgastemperatur stromauf des Katalysators mittels eines Modells aus Betriebskenngrößen der Brennkraftmaschine berechnet wird.

7. Verfahren nach einem der Ansprüche 3 bis 6, **dadurch gekennzeichnet, daß** als erste Größe ein Wert für die dem Katalysator zugeführte Wärme verwendet wird, der mit einem Korrekturfaktor hinsichtlich äußerer Einflüsse korrigiert wurde.

8. Verfahren nach einem der vorhergehenden Ansprüche, **dadurch gekennzeichnet, daß** als zweite Größe der Konvertierungsgrad des Katalysators verwendet wird.

9. Verfahren nach einem der vorhergehenden Ansprüche, **dadurch gekennzeichnet, daß** zum Bestimmen der zweiten Größe die Konzentration mindestens einer Schadstoffkomponente im Abgas stromab des Katalysators erfaßt wird.

10. Verfahren nach Anspruch 9, **dadurch gekennzeichnet, daß** die Konzentration der Schadstoffkomponente im Abgas auch stromauf des Katalysators erfaßt und aus dem Konzentrationsunterschied der Konvertierungsgrad des Katalysators bestimmt wird.

11. Verfahren nach einem der vorhergehenden Ansprüche, **dadurch gekennzeichnet, daß** als zweite Größe die Masse mindestens einer Schadstoffkomponente im Abgas stromab des Katalysators verwendet wird.

12. Verfahren nach Anspruch 11, **dadurch gekennzeichnet, daß** zur Bestimmung der Masse folgende Schritte durchgeführt werden:

   - Bestimmen des dem Katalysator zugeführten Abgasvolumenstroms,
   - Umrechnung des Volumenstroms in einen Massenstrom und Berechnung des Produktes aus Massenstrom und Konzentration der Schadstoffkomponente im Abgas stromab des Katalysators und
   - Integration dieses Produktes.

13. Verfahren nach einem der Ansprüche 11 oder 12, **dadurch gekennzeichnet, daß** die Masse der Schadstoffkomponente im Abgas hinter dem Katalysator mit der ersten Größe multipliziert wird und das hierdurch gebildete Produkt zur Überwachung der Funktionsfähigkeit des Katalysators benutzt wird.

14. Verfahren nach einem der vorhergehenden Ansprüche, **dadurch gekennzeichnet, daß** die Abhängigkeit der zweiten Größe von der ersten Größe an einem vorgegebenen Punkt bestimmt wird.

15. Verfahren nach Anspruch 14, **dadurch gekennzeichnet, daß** bei einem vorgegebenen Wert der ersten Größe ein Schwellwert der zweiten Größe gesetzt wird, bei dessen Unterschreitung eine unzureichende Funktionsfähigkeit des Katalysators diagnostiziert wird, wobei der vorgegebene Wert der ersten Größe in einem Bereich liegt, in dem eine Alterung des Katalysators eine starke Änderung der zweiten Größe verursacht.

16. Verfahren nach einem der Ansprüche 1 bis 14, **dadurch gekennzeichnet, daß** bei einem vorgegebenen Wert der zweiten Größe ein Schwellwert der ersten Größe gesetzt wird, bei dessen Überschreitung eine unzureichende Funktionsfähigkeit des Katalysators diagnostiziert wird, wobei der vorgegebene Wert der zweiten Größe in einem Bereich liegt, in dem eine Alterung des Katalysators eine starke Änderung der ersten Größe verursacht.

17. Verfahren nach einem der Ansprüche 1 bis 14, **dadurch gekennzeichnet, daß** die Änderung der zweiten Größe in einem Intervall der ersten Größe bestimmt wird und bei Unterschreiten eines vorgegebenen Schwellwertes der zweiten Größe eine unzureichende Funktionsfähigkeit des Katalysators diagnostiziert wird.

18. Verfahren nach einem der Ansprüche 1 bis 14, **dadurch gekennzeichnet, daß** die Änderung der ersten Größe in einem Intervall der zweiten Größe bestimmt wird und bei Überschreiten eines vorgegebenen Schwellwertes der Änderung der ersten Größe eine unzureichende Funktionsfähigkeit des Katalysators diagnostiziert wird.

19. Verfahren nach Anspruch 18, **dadurch gekennzeichnet, daß** die Änderung der ersten Größe vor Vergleich mit dem Schwellwert noch mit dem Mittelwert der ersten Größe multipliziert wird.

20. Vorrichtung zum Überwachen der Funktionsfähigkeit eines im Abgastrakt (3) einer Brennkraftmaschine (1) angeordneten Katalysators (15), mit

- einer ersten Meßeinrichtung (5, 9, 12) zum Erfassen einer für die Temperatur des Katalysators charakteristischen ersten Größe während einer Aufheizphase,
- einer zweiten Meßeinrichtung (8, 10) zum Erfassen einer für den Konvertierungsgrad des Katalysators charakteristischen zweiten Größe, die von der ersten Größe abhängig ist, während der Aufheizphase und
- einem Steuergerät (4), das eine von der Alterung des Katalysators verursachte Änderung der Abhängigkeit der zweiten Größe von der ersten Große zum Überwachen der Funktionsfähigkeit des Katalysators benutzt.

21. Vorrichtung nach Anspruch 20, **dadurch gekennzeichnet, daß** die erste Meßeinrichtung einen Temperaturaufnehmer (9) aufweist, der die Festkörpertemperatur des Katalysators (15) mißt.

22. Vorrichtung nach Anspruch 20, **dadurch gekennzeichnet, daß** die erste Meßeinrichtung (5, 9, 12) die Abgastemperatur mißt sowie Meßwerte liefert, aus denen der Abgasvolumenstrom bestimmt werden kann.

23. Vorrichtung nach Anspruch 22, **dadurch gekennzeichnet, daß** die erste Meßeinrichtung (5, 9, 12) den Massenstrom der Ansaugluft der Brennkraftmaschine (1), einen eventuell vorhandenen Sekundärluftmassenstrom, der dem Abgasstrom stromauf des Katalysators (15) zugemischt wird, und die Lambdazahl mißt.

24. Vorrichtung nach einem der Ansprüche 20 bis 23, **dadurch gekennzeichnet, daß** dem Steuergerät (4) zur Überwachung des Katalysators (15) benötigte Betriebskenngrößen der Brennkraftmaschine (1) zugeführt werden.

25. Vorrichtung nach Anspruch 24, **dadurch gekennzeichnet, daß** das Steuergerät (4)aus Betriebskenngrößen mittels eines Modells die Abgastemperatur stromauf des Katalysators (15) berechnet.

26. Vorrichtung nach einem der Ansprüche 20 bis 25, **dadurch gekennzeichnet, daß** die zweite Meßeinrichtung (8, 10) einen Meßaufnehmer (10) umfaßt, der die Konzentration mindestens einer Schadstoffkomponente stromab des Katalysators (15) mißt.

27. Vorrichtung nach Anspruch 26, **dadurch gekennzeichnet, daß** die zweite Meßeinrichtung (8, 10) einen Meßaufnehmer (8) aufweist, der die Konzentration mindestens einer Schadstoffkomponente stromauf des Katalysators (15) mißt.

28. Vorrichtung nach einem der Ansprüche 20 bis 27, **dadurch gekennzeichnet, daß** das Steuergerät (4) in ein Betriebssteuergerät der Brennkraftmaschine (1) integriert ist.

29. Vorrichtung nach einem der Ansprüche 20 bis 28, **dadurch gekennzeichnet, daß** der Katalysator (15) ein Oxidationskatalysator ist.

30. Vorrichtung nach einem der Ansprüche 20 bis 29, **dadurch gekennzeichnet, daß** der Katalysator (15) ein Reduktionskatalysator ist.

31. Vorrichtung nach Anspruch 20 bis 30, **dadurch gekennzeichnet, daß** das Steuergerät (4) mit einer Warneinrichtung verbunden ist, mittels der eine unzureichende Funktionsfähigkeit des Katalysators (15) angezeigt wird.

32. Vorrichtung nach Anspruch 20 bis 31, **dadurch gekennzeichnet, daß** das Steuergerät (4) einen Speicher aufweist, der bei der Wartung der Brennkraftmaschine (1) auslesbar ist und in dem das Auftreten einer ungenügenden Funktion des Katalysators (15) abspeicherbar ist.

## Claims

1. Method for monitoring the ability to function of a catalyst arranged in the exhaust duct of an internal combustion engine, in which a first variable, which is characteristic of the temperature of the catalyst, and a second variable, which is characteristic of the degree of conversion of the catalyst and is dependent on the first variable, are determined by continuous measurements during a heating-up phase of the catalyst, and a change in the dependence of the second variable on the first variable caused by ageing of the catalyst is used to monitor the ability to function of the catalyst.

2. Method according to Claim 1, **characterized in that** the solid-body temperature of the catalyst is used as the first variable.

3.  Method according to Claim 1, **characterized in that** the heat fed to the catalyst is used as the first variable.

4.  Method according to Claim 3, **characterized in that** the heat fed to the catalyst is determined by the following steps:

    -   determination of the exhaust-gas temperature upstream of the catalyst,
    -   determination of the volume flow of exhaust gas fed to the catalyst and
    -   calculation of the heat fed to the catalyst from the exhaust-gas temperature, the volume flow and the heat capacity of the exhaust gas.

5.  Method according to either of Claims 3 or 4, **characterized in that** the heat fed to the catalyst is determined only when, after a cold start of the internal combustion engine, no more latent heat is being absorbed for the evaporation of condensates in the catalyst.

6.  Method according to either of Claims 4 and 5, **characterized in that** the exhaust-gas temperature upstream of the catalyst is calculated by means of a model from operating parameters of the internal combustion engine.

7.  Method according to one of Claims 3 to 6, **characterized in that** a value for the heat fed to the catalyst which has been corrected with respect to external influences by means of a correction factor is used as the first variable.

8.  Method according to one of the preceding claims, **characterized in that** the degree of conversion of the catalyst is used as the second variable.

9.  Method according to one of the preceding claims, **characterized in that** the concentration of at least one pollutant component in the exhaust gas downstream of the catalyst is detected for the purpose of determining the second variable.

10. Method according to Claim 9, **characterized in that** the concentration of the pollutant component in the exhaust gas is also detected upstream of the catalyst, and the degree of conversion of the catalyst is determined from the difference in concentration.

11. Method according to one of the preceding claims, **characterized in that** the mass of at least one pollutant component in the exhaust gas downstream of the catalyst is used as the second variable.

12. Method according to Claim 11, **characterized in that** the following steps are performed in order to determine the mass:

    -   determination of the exhaust-gas volume flow fed to the catalyst,
    -   conversion of the volume flow into a mass flow and calculation of the product of the mass flow and concentration of the pollutant component in the exhaust gas downstream of the catalyst and
    -   integration of this product.

13. Method according to either of Claims 11 and 12, **characterized in that** the mass of the pollutant component in the exhaust gas downstream of the catalyst is multiplied by the first variable, and the product thereby formed is used to monitor the ability to function of the catalyst.

14. Method according to one of the preceding claims, **characterized in that** the dependence of the second variable on the first variable is determined at a specified point.

15. Method according to Claim 14, **characterized in that** a threshold value of the second variable is set at a specified value of the first variable and, when this threshold is undershot, inadequate ability to function of the catalyst is diagnosed, the specified value of the first variable lying in a range in which ageing of the catalyst causes a large change in the second variable.

16. Method according to one of Claims 1 to 14, **characterized in that** a threshold value of the first variable is set at a specified value of the second variable and, when this threshold is exceeded, inadequate ability to function of the catalyst is diagnosed, the specified value of the second variable lying in a range in which ageing of the catalyst causes a large change in the first variable.

17. Method according to one of Claims 1 to 14, **characterized in that** the change in the second variable is determined in an interval of the first variable and, when a specified threshold value of the second variable is undershot, inadequate ability to function of the catalyst is diagnosed.

18. Method according to one of Claims 1 to 14, **characterized in that** the change in the first variable is determined in an interval of the second variable and, when a specified threshold value for the change in the first variable is exceeded, inadequate ability to function of the catalyst is diagnosed.

19. Method according to Claim 18, **characterized in that** the change in the first variable is also multiplied by the mean value of the first variable before comparison with the threshold value.

20. Device for monitoring the ability to function of a catalyst (15) arranged in the exhaust duct (3) of an internal combustion engine (1), having

    - a first measuring device (5, 9, 12) for detecting, during a heating-up phase, a first variable characteristic of the temperature of the catalyst,
    - a second measuring device (8, 10) for detecting, during the heating-up phase, a second variable, which is characteristic of the degree of conversion of the catalyst and is dependent on the first variable, and
    - a control unit (4), which uses a change in the dependence of the second variable on the first variable caused by ageing the catalyst to monitor the ability to function of the catalyst.

21. Device according to Claim 20, **characterized in that** the first measuring device has a temperature pick-up (9) which measures the solid-body temperature of the catalyst (15).

22. Device according to Claim 20, **characterized in that** the first measuring device (5, 9, 12) measures the exhaust-gas temperature and supplies measured values, from which the volume flow of exhaust gas can be determined.

23. Device according to Claim 22, **characterized in that** the first measuring device (5, 9, 12) measures the mass flow of the intake air of the internal combustion engine (1), any secondary-air mass flow metered to the exhaust-gas flow upstream of the catalyst (15), and the lambda value.

24. Device according to one of Claims 20 to 23, **characterized in that** operating parameters of the internal combustion engine (1) which are required for monitoring the catalyst (15) are fed to the control unit (4).

25. Device according to Claim 24, **characterized in that** the control unit (4) calculates the exhaust-gas temperature upstream of the catalyst (15) from operating parameters by means of a model.

26. Device according to one of Claims 20 to 25, **characterized in that** the second measuring device (8, 10) comprises a measurement pick-up (10) which measures the concentration of at least one pollutant component downstream of the catalyst (15).

27. Device according to Claim 26, **characterized in that** the second measuring device (8, 10) has a measurement pick-up (8) which measures the concentration of at least one pollutant component upstream of the catalyst (15).

28. Device according to one of Claims 20 to 27, **characterized in that** the control unit (4) is integrated into an operation control unit of the internal combustion engine (1).

29. Device according to one of Claims 20 to 28, **characterized in that** the catalyst (15) is an oxidation catalyst.

30. Device according to one of Claims 20 to 29, **characterized in that** the catalyst (15) is a reduction catalyst.

31. Device according to Claims 20 to 30, **characterized in that** the control unit (4) is connected to a warning device which indicates inadequate ability to function of the catalyst (15).

32. Device according to Claims 20 to 31, **characterized in that** the control unit (4) has a memory which can be read out during servicing of the internal combustion engine (1) and in which the occurrence of inadequate functioning of the catalyst (15) can be stored.

**Revendications**

1. Procédé de surveillance de l'aptitude d'un catalyseur, disposé dans le trajet de gaz d'échappement d'un moteur à combustion interne, à remplir sa fonction, selon lequel, au moyen de mesures continues effectuées pendant une phase d'échauffement du catalyseur, une première grandeur, caractéristique de la température du catalyseur, et une seconde grandeur, qui est caractéristique du degré de conversion du catalyseur et qui dépend de la première grandeur, sont déterminées et une variation de la dépendance de la seconde grandeur vis-à-vis de la première grandeur qui est due au vieillissement du catalyseur est utilisée pour la surveillance de l'aptitude du catalyseur à remplir sa fonction.

2. Procédé suivant la revendication 1, **caractérisé en ce que** la température de corps solide du catalyseur est utilisée en tant que première grandeur.

3. Procédé suivant la revendication 1, **caractérisé en ce que** la chaleur apportée au catalyseur est utilisée en tant que première grandeur.

4. Procédé suivant la revendication 3, **caractérisé en ce que** la chaleur apportée au catalyseur est déterminée au moyen des opérations suivantes :

   - détermination de la température des gaz d'échappement en amont du catalyseur,
   - détermination du débit volumique des gaz d'échappement apporté au catalyseur et
   - calcul de la chaleur apportée au catalyseur à partir de la température de gaz d'échappement, du débit volumique et de la capacité thermique des gaz d'échappement.

5. Procédé suivant l'une des revendications 3 et 4, **caractérisé en ce que** la chaleur apportée au catalyseur n'est déterminée que lorsqu'après un démarrage à froid du moteur à combustion interne, il n'est plus prélevé de chaleur latente pour l'évaporation de condensats dans le catalyseur.

6. Procédé suivant l'une des revendications 4 et 5, **caractérisé en ce que** la température des gaz d'échappement en amont du catalyseur est calculée au moyen d'un modèle à partir de grandeurs caractéristiques de fonctionnement du moteur à combustion interne.

7. Procédé suivant l'une des revendications 3 à 6, **caractérisé en ce qu'**une valeur qui correspond à la chaleur apportée au catalyseur et qui a été corrigée par un facteur de correction en ce qui concerne des influences extérieures est utilisée en tant que première grandeur.

8. Procédé suivant l'une des revendications précédentes, **caractérisé en ce que** le degré de conversion du catalyseur est utilisé en tant que seconde grandeur.

9. Procédé suivant l'une des revendications précédentes, **caractérisé en ce que** la concentration d'au moins un composant nocif dans les gaz d'échappement en aval du catalyseur est détectée pour la détermination de la seconde grandeur.

10. Procédé suivant la revendication 9, **caractérisé en ce que** la concentration du composant nocif dans les gaz d'échappement est détectée également en amont du catalyseur et est déterminée à partir de la différence de concentration du degrè de conversion du catalyseur.

11. Procédé suivant l'une des revendications précédentes, **caractérisé en ce que** la masse d'au moins un composant nocif dans les gaz d'échappement en aval du catalyseur est utilisée en tant que seconde grandeur.

12. Procédé suivant la revendication 11, **caractérisé en ce que**, pour la détermination de la masse, les opérations suivantes sont exécutées :

   - détermination du débit volumique de gaz d'échappement introduit dans le catalyseur,
   - transformation par le calcul du débit volumique en un débit massique et calcul du produit formé à partir du débit massique et de la concentration du composant nocif dans les gaz d'échappement en aval du catalyseur et

- intégration de ce produit.

13. Procédé suivant l'une des revendications 11 et 12, **caractérisé en ce que** la masse du composant nocif dans les gaz d'échappement après le catalyseur est multipliée par la première grandeur et le produit ainsi formé est utilisé pour la surveillance de l'aptitude du catalyseur à remplir sa fonction.

14. Procédé suivant l'une des revendications précédentes, **caractérisé en ce que** la dépendance de la seconde grandeur vis-à-vis de la première grandeur est déterminée en un point préfixé.

15. Procédé suivant la revendication 14, **caractérisé en ce que**, pour une valeur préfixée de la première grandeur, il est fixé une valeur de seuil de la seconde grandeur pour le franchissement de laquelle vers le bas une aptitude insuffisante du catalyseur à remplir sa fonction est diagnostiquée, la valeur préfixée de la première grandeur étant située dans un domaine dans lequel un vieillissement du catalyseur provoque une forte variation de la seconde grandeur.

16. Procédé suivant rune des revendications 1 à 14, **caractérisé en ce que**, pour une valeur préfixée de la seconde grandeur, il est fixé une valeur de seuil de la première grandeur pour le dépassement de laquelle une aptitude insuffisante du catalyseur à remplir sa fonction est diagnostiquée, la valeur préfixée de la seconde grandeur étant située dans un domaine dans lequel un vieillissement du catalyseur provoque une forte variation de la première grandeur.

17. Procédé suivant l'une des revendications 1 à 14, **caractérisé en ce que** la variation de la seconde grandeur est déterminée dans un intervalle de la première grandeur et, lors d'un franchissement vers le bas d'une valeur de seuil préfixée de la seconde grandeur, une aptitude insuffisante du catalyseur à remplir sa fonction est diagnostiquée.

18. Procédé suivant l'une des revendications 1 à 14, **caractérisé en ce que** la variation de la première grandeur est déterminée dans un intervalle de la seconde grandeur et, lors d'un dépassement d'une valeur de seuil préfixée de la variation de la première grandeur, une aptitude insuffisante du catalyseur à remplir sa fonction est diagnostiquée.

19. Procédé suivant la revendication 18, **caractérisé en ce qu'**avant une comparaison avec la valeur de seuil, la variation de la première grandeur est encore multipliée par la valeur moyenne de la première grandeur.

20. Dispositif de surveillance de l'aptitude d'un catalyseur (15), disposé dans le trajet de gaz d'échappement (3) d'un moteur à combustion inteme (1), à remplir sa fonction, comprenant

- un premier dispositif de mesure (5, 9, 12) servant à détecter, pendant une phase d'échauffement, une première grandeur caractéristique pour la température du catalyseur,
- un second dispositif de mesure (8, 10) servant à détecter, pendant la phase d'échauffement, une seconde grandeur qui est caractéristique pour le degré de conversion du catalyseur et qui dépend de la première grandeur et
- un appareil de commande (4) qui utilise une variation de la dépendance de la seconde grandeur vis-à-vis de la première grandeur, provoquée par le vieillissement du catalyseur, pour la surveillance de l'aptitude du catalyseur à remplir sa fonction.

21. Dispositif suivant la revendication 20, **caractérisé en ce que** le premier dispositif de mesure comprend une sonde de température (9) qui mesure la température de corps solide du catalyseur (15).

22. Dispositif suivant la revendication 20, **caractérisé en ce que** le premier dispositif de mesure (5, 9, 12) mesure la température des gaz d'échappement et foumit des valeurs mesurées à partir desquelles le débit volumique de gaz d'échappement peut être déterminé.

23. Dispositif suivant la revendication 22, **caractérisé en ce que** le premier dispositif de mesure (5, 9, 12) mesure le débit massique de l'air d'admission du moteur à combustion inteme (1), un débit massique d'air secondaire éventuellement existant, qui est mélangé d'une manière dosée au débit de gaz d'échappement en amont du catalyseur (15), et le rapport lambda.

**24.** Dispositif suivant l'une des revendications 20 à 23, **caractérisé ce en ce que** des grandeurs caractéristiques de fonctionnement du moteur à combustion interne (1) qui sont nécessaires pour la surveillance du catalyseur (15) sont envoyées à l'appareil de commande (4).

**25.** Dispositif suivant la revendication 24, **caractérisé en ce que** l'appareil de commande (4) calcule la température des gaz d'échappement en amont du catalyseur (15), au moyen d'un modèle, à partir de grandeurs caractéristiques de fonctionnement.

**26.** Dispositif suivant l'une des revendications 20 à 25, **caractérisé en ce que** le second dispositif de mesure (8, 10) comprend un détecteur de mesure (10) qui mesure la concentration d'au moins un composant nocif en aval du catalyseur (15).

**27.** Dispositif suivant la revendication 26, **caractérisé en ce que** le second dispositif de mesure (8, 10) comprend un détecteur de mesure (8) qui mesure la concentration d'au moins un composant nocif en amont du catalyseur (15).

**28.** Dispositif suivant l'une des revendications 20 à 27, **caractérisé en ce que** l'appareil de commande (4) est intégré dans un appareil de commande de fonctionnement du moteur à combustion interne (1).

**29.** Dispositif suivant l'une des revendications 20 à 28, **caractérisé en ce que** le catalyseur (15) est un catalyseur d'oxydation.

**30.** Dispositif suivant l'une des revendications 20 à 28, **caractérisé en ce que** le catalyseur (15) est un catalyseur de réduction.

**31.** Dispositif suivant une revendication 20 à 30, **caractérisé en ce que** l'appareil de commande (4) est relié à un dispositif d'alarme au moyen duquel une capacité insuffisante du catalyseur (15) à remplir sa fonction est indiquée.

**32.** Dispositif suivant une revendication 20 à 31, **caractérisé en ce que** l'appareil de commande (4) comprend une mémoire qui peut être lue lors de l'entretien du moteur à combustion inteme (1) et dans laquelle l'apparition d'une fonction insuffisante du catalyseur (15) peut être rangée en mémoire.

# FIG 1

# FIG 2

# FIG 3

# FIG 4

$$E_{th} = 0{,}5 \cdot (E_{\eta i} + E_{\eta f})$$

## FIG 5

E.ΔE [kJ$^2$]

Drehzahl [min$^{-1}$]

14

13

## FIG 6

mass$_i$ [g]

$[i]_{nach Kat}$

$[i]_{nach Kat}$

mass$_i$

14

13

Wärme [kJ]

# FIG 7